# FASCICULE DE BREVET EUROPEEN

(11) **EP 3 542 112 B1**
(45) Date de publication et mention de la délivrance du brevet: **13.04.2022**
(21) Numéro de dépôt: 17811996.2
(22) Date de dépôt: 16.11.2017
(51) Int. Cl.: F25J 3/02

(54) **PROCÉDÉ ET INSTALLATION DE SÉPARATION CRYOGÉNIQUE D'UN MÉLANGE GAZEUX PAR LAVAGE AU MÉTHANE**
VERFAHREN UND ANLAGE ZUR KRYOGENEN TRENNUNG EINES GASGEMISCHES DURCH METHANWÄSCHE
METHOD AND INSTALLATION FOR CRYOGENIC SEPARATION OF A GASEOUS MIXTURE BY METHANE SCRUBBING

(30) Priorité: 18.11.2016 FR 1661177
(43) Date de publication de la demande: 25.09.2019
(73) Titulaire: L'AIR LIQUIDE, Société Anonyme pour l'Etude et l'Exploitation des Procédés Georges Claude, 75007 Paris (FR)
(72) Inventeur: BILLY, Jean, 94420 Le Plessis-Trevise (FR); GAERTNER, Axelle, 93100 Montreuil (FR); HERNANDEZ, Antoine, 77340 Pontault Combault (FR); TSEVERY, Jean-Marc, 77127 Lieusaint (FR); VICTOR, Marie-Pascal, 75018 Paris (FR)
(74) Mandataire: Air Liquide
(86) Numéro de dépôt international: PCT/FR2017/053139
(87) Numéro de publication internationale: WO 2018/091831

(56) Documents cités:
- EP-A1- 1 479 989
- FR-A1- 2 353 819

## Description

La présente invention est relative à un procédé et une installation pour la production combinée a) d'un gaz enrichi en hydrogène et un gaz enrichi en monoxyde de carbone et/ou b) un mélange d'hydrogène et de monoxyde de carbone et éventuellement de méthane par distillation et lavage cryogéniques. En particulier elle concerne un procédé et à un appareil de séparation cryogénique d'un mélange gazeux par lavage au méthane.

Les unités de production de monoxyde de carbone et d'hydrogène peuvent être séparées en deux parties :
- ***génération du gaz de synthèse*** (mélange contenant H2, CO, CH4, CO2, Ar et N2 essentiellement).
- ***purification du gaz de synthèse.*** On retrouve :
- une unité de lavage à un solvant liquide pour éliminer la plus grande partie des gaz acides contenus dans le gaz de synthèse
- une unité d'épuration sur lit d'adsorbants.
- une unité de séparation par voie cryogénique dite boite froide pour la production de CO ou bien de mélange H₂/CO dit oxogas où les teneurs en CH₄ et N₂ sont faibles. Le procédé le plus souvent utilisé est le lavage au méthane.

Dans l'état de l'art, l'énergie de séparation est apportée par un compresseur de cycle CO avec un seul niveau de cycle basse pression (2.6 bar abs) pour le refroidissement de la colonne de lavage au méthane ainsi que pour le refroidissement de la tête de la colonne de distillation. Le niveau de pression est défini par la température de -182°C qui est la température la plus froide acceptable pour le refroidissement de la colonne de lavage au méthane pour éviter de solidifier le CH₄. Par souci de simplifier le compresseur de CO, on utilise également ce niveau de température de -182°C pour refroidir la tête de la colonne de distillation CO/CH₄. Ceci conduit à avoir un cycle haute pression de 28 bars abs pour pouvoir condenser le CO au niveau du rebouilleur de cuve de la colonne CO/CH₄.

Ainsi dans EP1479989, le fluide qui a servi à refroidir les fluides intermédiaires de la colonne de lavage est mélangé avec le gaz de tête de la colonne de distillation CO/CH4 avant d'être envoyé à l'entrée du compresseur de cycle produisant le CO produit. Ceci est possible parce que le fluide servant au refroidissement est à la même pression que la colonne de distillation. Or la pression du fluide de refroidissement ne peut être inférieure à 2,6 bars abs, sinon le méthane circulant dans la colonne de lavage risque de solidifier. Ainsi la colonne CO/CH4 doit fonctionner à au moins 2,6 bars et la pression maximale du cycle CO est au moins à 28 bars abs.

Similairement, dans FR2353819, le fluide qui a servi à refroidir les fluides intermédiaire est détendu avant d'être envoyé dans la colonne CO/CH4, de sorte qu'il se mélange avec le gaz de la colonne CO/CH4 avant d'être envoyé à l'entrée du compresseur de cycle.

Dans certains cas, le débit du compresseur CO est faible, ce qui conduit à utiliser un compresseur à technologie à piston au lieu de centrifuge.

Cependant la disponibilité d'un compresseur à piston est plus faible que pour un compresseur centrifuge, ce qui peut conduire à installer deux compresseurs à pistons d'une capacité 100% chacun pour pouvoir continuer à opérer y compris pendant les périodes de maintenance requises des compresseurs à piston.

Selon un objet de l'invention, il est prévu un procédé pour la production combinée a) d'un gaz enrichi en hydrogène et un gaz enrichi en monoxyde de carbone et/ou b) un mélange d'hydrogène et de monoxyde de carbone et éventuellement de méthane par distillation et lavage cryogéniques dans lequel :
i) on refroidit un mélange gazeux contenant au moins de l'hydrogène, du monoxyde de carbone et du méthane et éventuellement de l'azote dans un échangeur de chaleur
ii) on envoie le mélange refroidi à une colonne de lavage
iii) on introduit un liquide riche en méthane dans la colonne de lavage comme liquide de lavage
iv) on soutire un gaz enrichi en hydrogène comme gaz de tète de la colonne de lavage
v) on soutire un liquide de cuve de la colonne de lavage et on l'envoie à une colonne de stripage,
vi) on soutire un liquide de cuve de la colonne de stripage et on l'envoie à une colonne de séparation de monoxyde de carbone et de méthane
vii) au moins une partie du liquide de cuve de la colonne de séparation constitue le liquide de l'étape iii) et
viii) on utilise un fluide riche en monoxyde de carbone comme fluide de refroidissement pour refroidir au moins un fluide soutiré à un niveau intermédiaire de la colonne de lavage
ix) le fluide qui sert à refroidir au moins un fluide soutiré à un niveau intermédiaire de la colonne de lavage est à une pression supérieure à celle de la tête de la colonne de séparation caractérisé en ce que le fluide ayant servi à refroidir l'au moins un fluide soutiré à un niveau intermédiaire de la colonne de lavage est envoyé à un niveau intermédiaire d'un compresseur centrifuge pour y être comprimé.

Selon d'autres objets facultatifs de l'invention :
- le fluide qui sert à refroidir au moins un fluide soutiré à un niveau intermédiaire de la colonne de lavage est soutiré à partir de la tête de la colonne de séparation et compriméà pour former du monoxyde de carbone à une pression plus élevée et on détend au moins une partie du monoxyde de carbone à pression plus élevée pour former le fluide de refroidissement.
- on détend du liquide de la capacité située en tête de la colonne de séparation et on l'envoie à la colonne de séparation.
- la différence de pression entre le fluide qui sert à refroidir au moins un fluide soutiré à un niveau intermédiaire de la colonne de lavage et celle de la tête de la colonne de séparation est au moins 0,5 bars, voire au moins 0,9 bars.
- on récupère une partie du liquide de cuve de la colonne de séparation comme produit riche en méthane sous forme liquide ou sous forme gazeuse, après l'avoir vaporisé dans l'échangeur de chaleur.
- on produit de la colonne de séparation un fluide enrichi en monoxyde de carbone et on le mélange avec le fluide enrichi en hydrogène pour constituer un produit.
- un gaz enrichi en monoxyde de carbone chauffe la cuve de la colonne de stripage et/ou la cuve de la colonne de séparation et est envoyé à la capacité de tête après détente dans une vanne.
- on opère la colonne de séparation à 1,6 bars
- au moins une partie du liquide riche en monoxyde de carbone de la capacité située en tête de la colonne de séparation est détendu et envoyé en tête de la colonne de séparation pour être vaporisé au contact de la vapeur montante à l'intérieur de la colonne et est ensuite mélangé avec une partie du gaz de tête de la colonne de séparation.
- le fluide ayant servi à refroidir au moins un fluide soutiré à un niveau intermédiaire de la colonne de lavage n'est pas envoyé se séparer dans la colonne de séparation
- on utilise un cycle de monoxyde de carbone pour réchauffer les cuves de la colonne de stripage et de la colonne de séparation et pour refroidir la tête de la colonne de séparation, le compresseur centrifuge servant à comprimer le gaz de cycle
- la pression maximale de cycle du cycle de monoxyde de carbone est inférieure à 28 bars
- la pression maximale du cycle de monoxyde de carbone st de 22 bars
- on envoie un gaz de la tête de la colonne de séparation ou d'une capacité en tête de la colonne de séparation à l'entrée du compresseur

Selon un autre objet de l'invention, il est prévu une installation pour la production combinée a) d'un gaz enrichi en hydrogène et un gaz enrichi en monoxyde de carbone et/ou b) un mélange d'hydrogène et de monoxyde de carbone et éventuellement de méthane par distillation et lavage cryogéniques comprenant un compresseur centrifuge, un premier échangeur de chaleur, une colonne de lavage, une colonne de stripage, une colonne de séparation de monoxyde de carbone et de méthane , une conduite pour envoyer un mélange gazeux contenant au moins de l'hydrogène, du monoxyde de carbone et du méthane se refroidir dans le premier échangeur de chaleur, une conduite pour envoyer le mélange refroidi du premier changeur de chaleur à la colonne de lavage, une conduite pour introduire un liquide riche en méthane en tête de la colonne de lavage comme premier liquide de lavage, une conduite pour soutirer un gaz enrichi en hydrogène comme gaz de tète de la colonne de lavage, une conduite pour soutirer un liquide de cuve de la colonne de lavage et pour envoyer le liquide de cuve de la colonne de lavage à la colonne de stripage, une conduite pour soutirer un liquide de cuve de la colonne de stripage et l'envoyer à la colonne de séparation de monoxyde de carbone et de méthane, au moins une partie du liquide de cuve de la colonne de séparation constituant le liquide enrichi en méthane et une conduite pour soutirer un fluide enrichi en monoxyde de carbone de la tête de la colonne de séparation, une conduite pour envoyer un fluide enrichi en monoxyde de carbone comme fluide de refroidissement pour refroidir au moins un fluide soutiré à un niveau intermédiaire de la colonne de lavage dans un deuxième échangeur de chaleur caractérisé en ce que le fluide qui sert à refroidir l'au moins un fluide soutiré à un niveau intermédiaire de la colonne de lavage est à une pression supérieure à celle de la tête de la colonne de séparation caractérisé en ce qu'il comprend des moyens pour envoyer le fluide ayant servi à refroidir l'au moins un fluide soutiré à un niveau intermédiaire de la colonne de lavage, à une pression supérieure à celle de la tête de la colonne de séparation, à un niveau intermédiaire du compresseur centrifuge.

L'installation comprend des moyens reliant le compresseur centrifuge avec la colonne de séparation et peut comprendre des moyens pour envoyer au compresseur centrifuge le gaz enrichi en monoxyde de carbone provenant de la colonne de séparation pour pressuriser ce gaz de sorte qu'il puisse servir de produit et comme un gaz de cycle pour réchauffer les cuves de la colonne de stripage (31) et de la colonne de séparation (37) et pour refroidir la tête de la colonne de séparation. Le compresseur peut être relié au deuxième échangeur de chaleur à travers une vanne de détente.

L'installation peut comprendre une capacité de monoxyde de carbone liquide en tête colonne.

L'installation peut comprendre des moyens pour récupérer une partie du liquide de cuve de la colonne de séparation comme produit riche en méthane sous forme liquide.

L'installation peut comprendre des moyens pour récupérer une partie du liquide de cuve de la colonne de séparation comme produit riche en méthane sous forme gazeuse, comprenant des moyens pour envoyer la partie se vaporiser dans l'échangeur de chaleur, éventuellement après avoir été pressurisé.

L'installation peut comprendre des moyens pour détendre du gaz provenant du compresseur centrifuge pour servir de fluide de refroidissement de l'au moins un fluide soutiré à un niveau intermédiaire de la colonne de lavage.

L'installation peut comprendre des moyens pour envoyer un fluide de la tête de la colonne de séparation vers le deuxième échangeur de chaleur comme fluide de refroidissement.

L'installation peut comprendre des moyens pour envoyer un fluide d'une capacité située en tête de la colonne de séparation vers le deuxième échangeur de chaleur comme fluide de refroidissement.

L'invention propose de réduire la pression requise pour le cycle afin d'augmenter le débit volumique à la sortie du compresseur et ainsi pouvoir utiliser la technologie centrifuge au lieu de piston.

Ainsi en opérant la colonne CO/CH₄ à 1.6 bar abs, on a besoin de 22 bar abs de pression de cycle et non plus 28 bar abs.

Par contre on a besoin de maintenir à 2.6 bar abs la pression du CO qui refroidit la colonne de lavage au méthane. On a donc deux circuits de cycle CO, 2.6 bar abs et 1.6 bar abs.

Dans le cas où on a besoin de produire de l'oxogas à une pression plus haute que la pression du gaz de synthèse entrée boite froide, avoir un cycle CO à 22 bar au lieu de 28 bar abs permet également de réduire l'énergie totale.

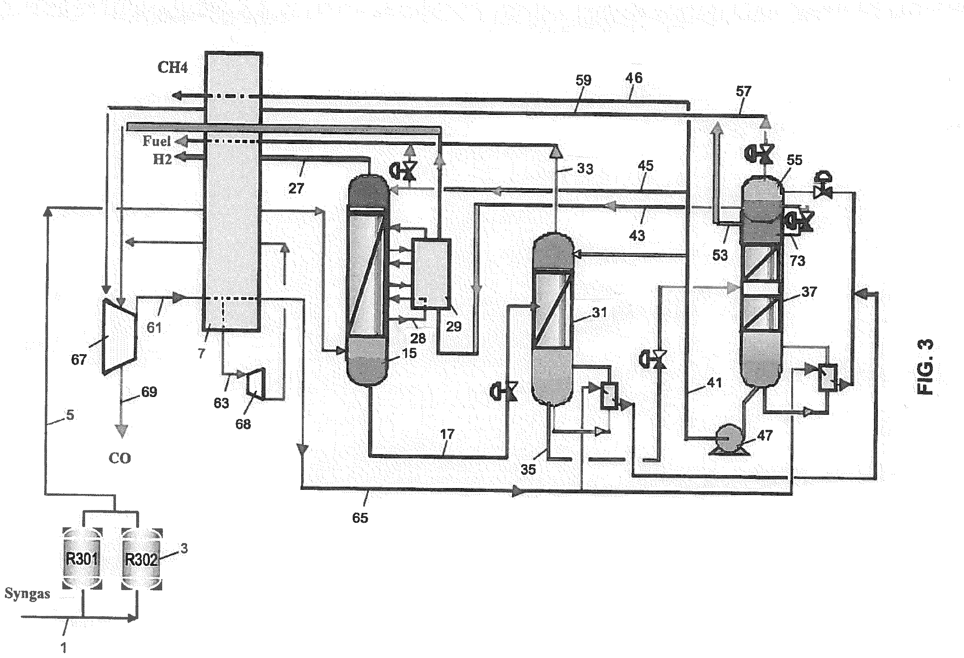

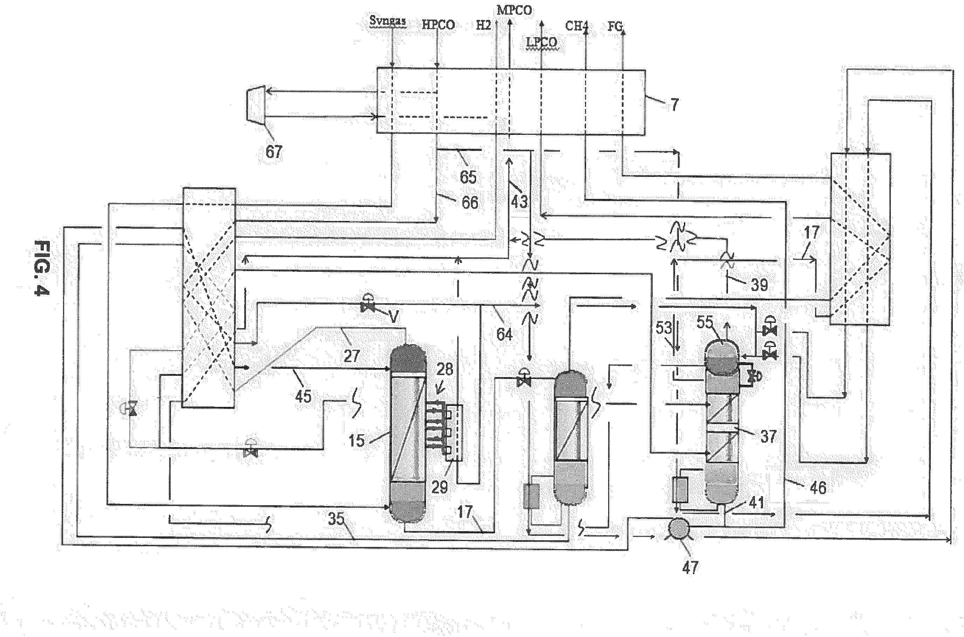

L'invention sera décrite de manière plus détaillée en se référant aux Figures 1 à 4, les Figures 1 et 2 représentant le procédé global et les Figures 3 et 4 montrant la séparation cryogénique en particulier.

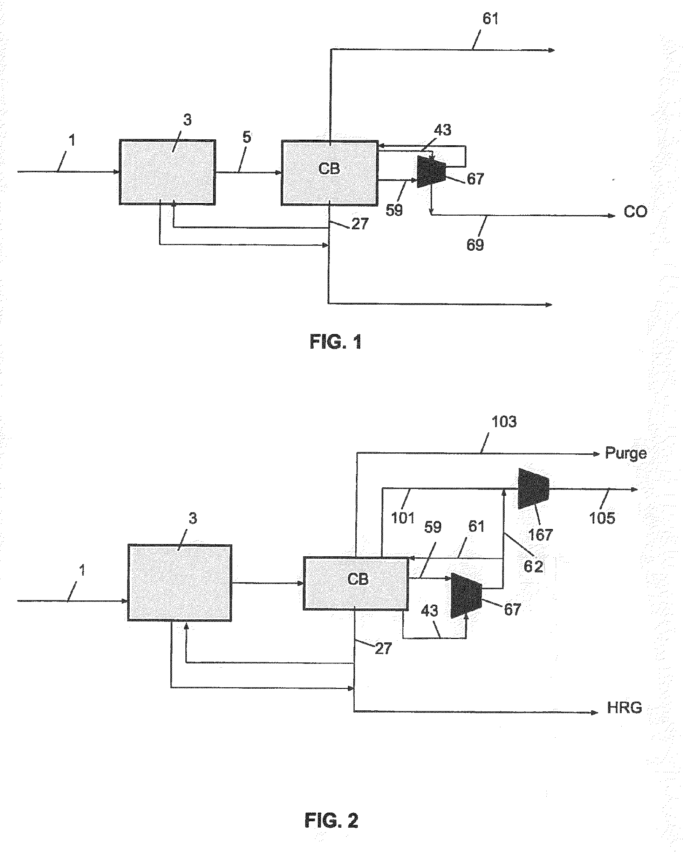

Selon le procédé de la Figure 1, un débit de gaz de synthèse à 24 bars contenant au moins de l'hydrogène, du monoxyde de carbone et du méthane et éventuellement de l'azote 1 est épuré en eau, dioxyde de carbone, méthanol et autres impuretés dans l'unité de purification 3 et ensuite le débit 5 de gaz de synthèse sec est envoyé à une boîte froide CB qui est une enceinte isolée contenant des colonnes de distillation. Un produit de ce système de colonnes de distillation est un gaz de purge 61. Un autre 27 est de l'hydrogène HRG dont une partie sert à régénérer l'unité de purification. Un débit de monoxyde de carbone 59 à 1,2 bars et un autre débit de monoxyde de carbone 43 à 2,2 bars sont envoyés à des niveaux différents du compresseur 67 où ils sont comprimés. Le débit 43 a servi à refroidir un débit soutiré à un niveau intermédiaire de la colonne de lavage. Un débit de produit 69 sort à un niveau intermédiaire du compresseur 67 à moins que 22 bars. Le reste du gaz est comprimé jusqu'à l'étage finale à une pression de 22 bars et est renvoyé à la boîte froide CB.

Selon le procédé de la Figure 2, le procédé ne produit pas de monoxyde de carbone mais un mélange de monoxyde de carbone et d'hydrogène formé en mélangeant un gaz 101 soutiré de la colonne de lavage de méthane à un niveau intermédiaire contenant de l'hydrogène et du monoxyde de carbone et une partie du gaz comprimé dans le dernier étage du compresseur 67 à 22 bars. Une partie 61 du gaz à 22 bars est renvoyée à la boîte froide CB et le reste 62 est comprimé dans un compresseur 167 avec le débit 101 pour former un produit 105 contenant du monoxyde de carbone et de l'hydrogène à 29 bars.

Selon le procédé de la Figure 3, un débit de gaz de synthèse contenant au moins de l'hydrogène, du monoxyde de carbone et du méthane et éventuellement de l'azote 1 est épuré en eau, dioxyde de carbone, méthanol et autres impuretés dans l'unité de purification 3 et ensuite le débit 5 de gaz de synthèse sec est envoyé à la boîte froide où il se refroidit dans l'échangeur de chaleur 7, qui est de préférence un échangeur à plaques en aluminium brasé. Le gaz refroidi est envoyé en bas d'une colonne de lavage 15. La colonne de lavage est alimentée en tête avec un liquide riche en méthane 45 comme liquide de lavage. On soutire un gaz enrichi en hydrogène 27 comme gaz de tète de la colonne de lavage 15 et on soutire un liquide de cuve 17 de la colonne de lavage.

Le liquide de cuve 17 de la colonne de lavage est envoyé au milieu d'une colonne de stripage 31. Au moins un, de préférence plusieurs liquides intermédiaires 28 sont soutirés à des niveaux intermédiaires de la colonne de lavage 15 et sont envoyés se vaporiser dans l'échangeur de chaleur 29. Un liquide de cuve 35 est soutiré de la colonne de stripage 31 et envoyé à 1,6 bars à une colonne de séparation de monoxyde de carbone et de méthane 37 à un niveau intermédiaire après refroidissement. Au moins une partie 45 du liquide de cuve 41 de la colonne de séparation 37 constitue le liquide de lavage après pressurisation dans la pompe 47. Un gaz riche en monoxyde de carbone 53 est soutiré en tête de la colonne de séparation 37. La colonne de séparation 37 opère à 1,6 bars et comprend éventuellement une capacité 55 qui sert de stockage de monoxyde de carbone liquide en tête de colonne. Le gaz 53 à 1,6 bars abs est mélangé avec le gaz 57 de la capacité, après avoir détendu le gaz 57 de la capacité depuis la pression de la capacité de 2,6 bars abs à 1,6 bars abs. Le mélange des deux gaz 59 est réchauffé dans l'échangeur 7 et envoyé à l'entrée d'un compresseur 67 de monoxyde de carbone pour fournir le produit riche en monoxyde de carbone 69. Une partie 61 du monoxyde de carbone à 22 bars abs est refroidie dans l'échangeur de chaleur 7 et divisée en deux ; une partie 63 est détendue dans une turbine 68 pour être réchauffée dans l'échangeur 7 et renvoyée au compresseur 57. Le reste 65 à 22 bars abs sert à rebouillir les colonnes 31 et 37 et, le cas échéant, à alimenter la capacité 55. Le gaz riche en monoxyde de carbone qui a servi à chauffer les cuves des colonnes 31 et 37 est détendu de 22 bars abs jusqu'à la pression de la capacité qui est de 2,6 bars pour former un débit diphasique. Du liquide enrichi en monoxyde de carbone s'accumule dans la capacité 55 et est envoyé à travers une vanne de détente en haut de la colonne de séparation à travers une conduite 73 pour détendre le liquide de 2,6 bars à 1,6 bars, la pression de tête de la colonne de séparation 37.

On a donc deux circuits de cycle CO, 2.6 bar abs et 1.6 bar abs.

Du monoxyde de carbone liquide 43 du stockage 55 après détente sert à refroidir des fluides intermédiaires 28 de la colonne de lavage 15 à un point en dessous de l'arrivée du liquide de lavage. Sinon le monoxyde de carbone liquide 43 peut être pris en tête de la colonne CO/CH4 37 et envoyé à l'échangeur de chaleur 29 pour refroidir les fluides intermédiaires 28.

Un gaz 33 sort de la tête de la colonne de stripage 31 et un produit riche en méthane 46 est éventuellement soutiré de la colonne CO/CH4 37 sous forme liquide et vaporisé dans l'échangeur 7.

Le gaz 33 est mélangé avec une partie du méthane 45, après détente de celle-ci dans une vanne. Le mélange ainsi formé est réchauffé et peut servir de carburant.

Le gaz 43 qui a servi à refroidir les soutirages intermédiaires 28 de la colonne de lavage est envoyé à 2,6 bars à un niveau intermédiaire du compresseur 67.

Le gaz enrichi en monoxyde de carbone 69 sert de produit, éventuellement mélangé avec un autre produit pour former du oxogaz.

La différence de pression entre le fluide 43 qui sert à refroidir au moins un fluide intermédiaire de la colonne de lavage 15 et celle de la tête de la colonne de séparation 37 est au moins 0,5 bars, voire au moins 0,9 bars.

En alternatif, comme illustré dans la Figure 4, une partie 66 du gaz 61 ou 69 comprimé dans le compresseur 67 (pas illustré) peut être détendue dans une vanne V pour servir de fluide de refroidissement d'au moins un fluide 28 soutiré à un niveau intermédiaire de la colonne de lavage 15 dans l'échangeur 29. Même après détente, ce fluide 66 sera à une pression supérieure à celle de la tête de la colonne de séparation 37 d'au moins 0,5 bars, voire d'au moins 0,9 bars.

Le fluide 66 refroidi dans l'échangeur de chaleur 29 est ensuite renvoyé comme gaz 43 vers le compresseur 67 à un niveau intermédiaire de celui-ci. Il est mélangé au gaz 39 provenant de la capacité 55 et au liquide vaporisé provenant de la capacité 55.

Une autre partie 64 du fluide détendu dans la vanne V est envoyée à la capacité 55 ou simplement en tête de la colonne 37 s'il n'y a pas de capacité 55.

Le gaz 53, 59 provenant de la tête de la colonne CO/CH4 et à plus basse pression que le débit 43 est envoyé à l'entrée du compresseur 67.

Le gaz 39 produit dans la capacité 55 se mélange avec le gaz ayant servi à réchauffer l'échangeur 29 et est renvoyé au compresseur comme le gaz 43.

Dans cette variante, le méthane produit 46 n'a pas été pressurisé dans la pompe 47 avant de se vaporiser dans l'échangeur 7.

## Revendications

1. Procédé pour la production combinée a) d'un gaz enrichi en hydrogène et un gaz enrichi en monoxyde de carbone et/ou b) un mélange d'hydrogène et de monoxyde de carbone et éventuellement de méthane par distillation et lavage cryogéniques dans lequel :
i) on refroidit un mélange gazeux (1) contenant au moins de l'hydrogène, du monoxyde de carbone et du méthane et éventuellement de l'azote dans un échangeur de chaleur (7)
ii) on envoie le mélange refroidi à une colonne de lavage (15)
iii) on introduit un liquide riche en méthane (45) dans la colonne de lavage comme liquide de lavage
iv) on soutire un gaz enrichi en hydrogène comme gaz de tète (27) de la colonne de lavage
v) on soutire un liquide de cuve (17) de la colonne de lavage et on l'envoie à une colonne de stripage (31),
vi) on soutire un liquide de cuve (35) de la colonne de stripage et on l'envoie à une colonne de séparation (37) de monoxyde de carbone et de méthane
vii) au moins une partie du liquide de cuve (41,45) de la colonne de séparation constitue le liquide de l'étape iii) et
viii) on utilise un fluide (43,66) riche en monoxyde de carbone comme fluide de refroidissement pour refroidir au moins un fluide (28) soutiré à un niveau intermédiaire de la colonne de lavage
ix) le fluide qui sert à refroidir l'au moins un fluide soutiré à un niveau intermédiaire de la colonne de lavage est à une pression supérieure à celle de la tête de la colonne de séparation
**caractérisé en ce que** le fluide ayant servi à refroidir l'au moins un fluide soutiré à un niveau intermédiaire de la colonne de lavage est envoyé à un niveau intermédiaire d'un compresseur centrifuge (67) pour y être comprimé.

2. Procédé selon la revendication 1 dans lequel le fluide (43,66) qui sert à refroidir au moins un fluide (28) soutiré à un niveau intermédiaire de la colonne de lavage est soutiré à partir de la tête de la colonne de séparation (37) et comprimé pour former du monoxyde de carbone à une pression plus élevée et on détend au moins une partie du monoxyde de carbone à pression plus élevée pour former le fluide de refroidissement (66).

3. Procédé selon l'une des revendications précédentes dans lequel on détend du liquide d'une capacité située en tête de la colonne de séparation (37) et on l'envoie à la colonne de séparation.

4. Procédé selon l'une des revendications précédentes dans lequel la différence de pression entre le fluide (43,66) qui sert à refroidir au moins un fluide (28) soutiré à un niveau intermédiaire de la colonne de lavage et celle de la tête de la colonne de séparation est au moins 0,5 bars, voire au moins 0,9 bars.

5. Procédé selon l'une des revendications précédentes dans lequel on récupère une partie (46) du liquide de cuve de la colonne de séparation comme produit riche en méthane sous forme liquide ou sous forme gazeuse, après l'avoir vaporisé dans l'échangeur de chaleur (7).

6. Procédé selon l'une des revendications précédentes dans lequel on produit de la colonne de séparation un fluide (62) enrichi en monoxyde de carbone et on le mélange avec le fluide enrichi en hydrogène (101) pour constituer un produit (105).

7. Procédé selon l'une des revendications précédentes dans lequel un gaz enrichi en monoxyde de carbone (65) chauffe la cuve de la colonne de stripage (31) et/ou la cuve de la colonne de séparation (37) et est envoyé à une capacité (55) de tête de la colonne de séparation après détente dans une vanne.

8. Procédé selon l'une des revendications précédentes dans lequel au moins une partie du liquide riche en monoxyde de carbone d'une capacité (55) située en tête de la colonne de séparation (37) est détendu et envoyé en tête de la colonne de séparation pour être vaporisé au contact de la vapeur montante à l'intérieur de la colonne et est ensuite mélangé avec une partie (53) du gaz de tête de la colonne de séparation.

9. Procédé selon l'une des revendications précédentes dans lequel on opère la colonne de séparation (37) à 1,6 bars.

10. Procédé selon l'une des revendications précédentes dans lequel on envoie un gaz (53,57) de la tête de la colonne de séparation ou d'une capacité en tête de la colonne de séparation à l'entrée du compresseur (67).

11. Procédé selon l'une des revendications précédentes dans lequel on utilise un cycle de monoxyde de carbone pour réchauffer les cuves de la colonne de stripage (31) et de la colonne de séparation (37) et pour refroidir la tête de la colonne de séparation, le compresseur centrifuge (67) servant à comprimer le gaz de cycle.

12. Installation pour la production combinée a) d'un gaz enrichi en hydrogène (27) et un gaz enrichi en monoxyde de carbone (69) et/ou b) un mélange d'hydrogène et de monoxyde de carbone (105) et éventuellement de méthane par distillation et lavage cryogéniques comprenant un compresseur centrifuge (67), un premier échangeur de chaleur (7), une colonne de lavage (15), une colonne de stripage (31), une colonne de séparation de monoxyde de carbone et de méthane (37), une conduite pour envoyer un mélange gazeux (1) contenant au moins de l'hydrogène, du monoxyde de carbone et du méthane se refroidir dans le premier échangeur de chaleur, une conduite pour envoyer le mélange refroidi du premier changeur de chaleur à la colonne de lavage, une conduite pour introduire un liquide riche en méthane en tête de la colonne de lavage comme premier liquide de lavage, une conduite pour soutirer un gaz enrichi en hydrogène comme gaz de tète de la colonne de lavage, une conduite pour soutirer un liquide de cuve de la colonne de lavage et pour envoyer le liquide de cuve de la colonne de lavage à la colonne de stripage, une conduite pour soutirer un liquide de cuve de la colonne de stripage et l'envoyer à la colonne de séparation de monoxyde de carbone et de méthane, au moins une partie du liquide de cuve de la colonne de séparation constituant le liquide enrichi en méthane et une conduite pour soutirer un fluide enrichi en monoxyde de carbone de la tête de la colonne de séparation, une conduite pour envoyer un fluide enrichi en monoxyde de carbone (43,66) comme fluide de refroidissement pour refroidir au moins un fluide (28) soutiré à un niveau intermédiaire de la colonne de lavage dans un deuxième échangeur de chaleur (29), l'installation comprenant des
moyens pour envoyer le fluide ayant servi à refroidir l'au moins un fluide soutiré à un niveau intermédiaire de la colonne de lavage, à une pression supérieure à celle de la tête de la colonne de séparation, à un niveau intermédiaire du compresseur centrifuge.

13. Installation selon la revendication 12 dans lequel le compresseur est relié à la colonne de séparation (37) et comprenant des moyens pour envoyer au compresseur centrifuge (67) le gaz enrichi en monoxyde de carbone (17,37,59) provenant de la colonne de séparation pour pressuriser ce gaz de sorte qu'il puisse servir de produit et comme un gaz de cycle pour réchauffer les cuves de la colonne de stripage (31) et de la colonne de séparation (37) et pour refroidir la tête de la colonne de séparation,.

14. Installation selon la revendication 12 ou 13 comprenant des moyens (V) pour détendre du gaz (66) provenant du compresseur centrifuge (67) pour servir de fluide de refroidissement de l'au moins un fluide (28) soutiré à un niveau intermédiaire de la colonne de lavage (15).

15. Installation selon la revendication 12 ou 13 comprenant des moyens pour envoyer un fluide (43) de la tête de la colonne de séparation (37) vers le deuxième échangeur de chaleur (29) comme fluide de refroidissement.

## Patentansprüche

1. Verfahren zur kombinierten Erzeugung a) eines wasserstoffangereicherten Gases und eines kohlenmonoxidangereicherten Gases und/oder b) eines Gemisches aus Wasserstoff und Kohlenmonoxid und gegebenenfalls Methan durch kryogene Destillation und kryogene Wäsche, bei dem:
i) ein Gasgemisch (1), das mindestens Wasserstoff, Kohlenmonoxid und Methan und gegebenenfalls Stickstoff enthält, in einem Wärmetauscher (7) gekühlt wird,
ii) das gekühlte Gemisch zu einer Waschkolonne (15) geleitet wird,
iii) eine methanreiche Flüssigkeit (45) als Waschflüssigkeit in die Waschkolonne eingeführt wird,
iv) ein wasserstoffangereichertes Gas als Kopfgas (27) aus der Waschkolonne abgezogen wird,
v) eine Sumpfflüssigkeit (17) aus der Waschkolonne abgezogen wird und zu einer Strippkolonne (31) geleitet wird,
vi) eine Sumpfflüssigkeit (35) aus der Strippkolonne abgezogen wird und zu einer Kohlenmonoxid-Methan-Trennkolonne (37) geleitet wird,
vii) mindestens ein Teil der Sumpfflüssigkeit (41, 45) der Trennkolonne die Flüssigkeit des Schritts iii) bildet und
viii) ein kohlenmonoxidreiches Fluid (43, 66) als Kühlfluid verwendet wird, um mindestens ein Fluid (28), das auf einer Zwischenebene der Waschkolonne abgezogen wird, zu kühlen,
ix) das Fluid, das dazu dient, das mindestens eine auf einer Zwischenebene der Waschkolonne abgezogene Fluid zu kühlen, einen Druck aufweist, der höher als der des Kopfes der Trennkolonne ist,
**dadurch gekennzeichnet, dass** das Fluid, das dazu gedient hat, das mindestens eine auf einer Zwischenebene der Waschkolonne abgezogene Fluid zu kühlen, zu einer Zwischenebene eines Kreiselverdichters (67) geleitet wird, um darin verdichtet zu werden.

2. Verfahren nach Anspruch 1, bei dem das Fluid (43, 66), das dazu dient, mindestens ein auf einer Zwischenebene der Waschkolonne abgezogenes Fluid (28) zu kühlen, vom Kopf der Trennkolonne (37) aus abgezogen wird und verdichtet wird, um Kohlenmonoxid mit einem höheren Druck zu bilden, und mindestens ein Teil des Kohlenmonoxids mit höherem Druck entspannt wird, um das Kühlfluid (66) zu bilden.

3. Verfahren nach einem der vorhergehenden Ansprüche, bei dem Flüssigkeit einer im Kopf der Trennkolonne (37) gelegenen Kapazität entspannt wird und zur Trennkolonne geleitet wird.

4. Verfahren nach einem der vorhergehenden Ansprüche, bei dem die Druckdifferenz zwischen dem Fluid (43, 66), das dazu dient, mindestens ein auf einer Zwischenebene der Waschkolonne abgezogenes Fluid (28) zu kühlen, und dem des Kopfes der Trennkolonne mindestens 0,5 bar oder sogar mindestens 0,9 bar beträgt.

5. Verfahren nach einem der vorhergehenden Ansprüche, bei dem ein Teil (46) der Sumpfflüssigkeit der Trennkolonne als methanreiches Produkt in flüssiger Form oder in gasförmiger Form zurückgewonnen wird, nachdem sie in dem Wärmetauscher (7) verdampft wurde.

6. Verfahren nach einem der vorhergehenden Ansprüche, bei dem aus der Trennkolonne ein kohlenmonoxidangereichertes Fluid (62) erzeugt wird und mit dem wasserstoffangereicherten Fluid (101) gemischt wird, um ein Produkt (105) zu bilden.

7. Verfahren nach einem der vorhergehenden Ansprüche, bei dem ein kohlenmonoxidangereichertes Gas (65) den Sumpf der Strippkolonne (31) und/oder den Sumpf der Trennkolonne (37) erwärmt und nach Entspannung in einem Ventil zu einer Kapazität (55) im Kopf der Trennkolonne geleitet wird.

8. Verfahren nach einem der vorhergehenden Ansprüche, bei dem mindestens ein Teil der kohlenmonoxidreichen Flüssigkeit einer im Kopf der Trennkolonne (37) gelegenen Kapazität (55) entspannt wird und in den Kopf der Trennkolonne geleitet wird, um beim Kontakt mit dem im Innern der Kolonne aufsteigenden Dampf verdampft zu werden, und anschließend mit einem Teil (53) des Kopfgases der Trennkolonne gemischt wird.

9. Verfahren nach einem der vorhergehenden Ansprüche bei dem die Trennkolonne (37) mit 1,6 bar betrieben wird.

10. Verfahren nach einem der vorhergehenden Ansprüche, bei dem ein Gas (53, 57) aus dem Kopf der Trennkolonne oder aus einer Kapazität im Kopf der Trennkolonne zum Einlass des Verdichters (67) geleitet wird.

11. Verfahren nach einem der vorhergehenden Ansprüche, bei dem ein Kohlenmonoxidzyklus verwendet wird, um die Sümpfe der Strippkolonne (31) und der Trennkolonne (37) wiederzuerwärmen und um den Kopf der Trennkolonne zu kühlen, wobei der Kreiselverdichter (67) dazu dient, das Zyklusgas zu verdichten.

12. Anlage zur kombinierten Erzeugung a) eines wasserstoffangereicherten Gases (27) und eines kohlenmonoxidangereicherten Gases (69) und/oder b) eines Gemisches aus Wasserstoff und Kohlenmonoxid (105) und gegebenenfalls Methan durch kryogene Destillation und kryogene Wäsche, umfassend einen Kreiselverdichter (67), einen ersten Wärmetauscher (7), eine Waschkolonne (15), eine Strippkolonne (31), eine Trennkolonne zum Trennen von Kohlenmonoxid und Methan (37), eine Leitung, um ein Gasgemisch (1), das mindestens Wasserstoff, Kohlenmonoxid und Methan enthält, zum Abkühlen in den ersten Wärmetauscher zu leiten, eine Leitung, um das abgekühlte Gemisch vom ersten Wärmetauscher zur Waschkolonne zu leiten, eine Leitung, um eine methanreiche Flüssigkeit im Kopf der Waschkolonne als erste Waschflüssigkeit einzuleiten, eine Leitung, um ein wasserstoffangereichertes Gas als Kopfgas aus der Waschkolonne abzuziehen, eine Leitung, um eine Sumpfflüssigkeit aus der Waschkolonne abzuziehen und um die Sumpfflüssigkeit von der Waschkolonne zur Strippkolonne zu leiten, eine Leitung, um eine Sumpfflüssigkeit aus der Strippkolonne abzuziehen und sie zur Kohlenmonoxid-Methan-Trennkolonne zu leiten, wobei mindestens ein Teil der Sumpfflüssigkeit der Trennkolonne die methanangereicherte Flüssigkeit bildet, und eine Leitung, um ein kohlenmonoxidangereichertes Fluid aus dem Kopf der Trennkolonne abzuziehen, eine Leitung, um ein kohlenmonoxidangereichertes Fluid (43, 66) als Kühlfluid zum Kühlen mindestens eines Fluids (28), das auf einer Zwischenebene der Waschkolonne abgezogen wird, in einen zweiten Wärmetauscher (29) zu leiten, wobei die Anlage Einrichtungen umfasst, um das Fluid, das dazu gedient hat, das mindestens eine auf einer Zwischenebene der Waschkolonne abgezogene Fluid zu kühlen, mit einem Druck, der höher als der des Kopfes der Trennkolonne ist, zu einer Zwischenebene des Kreiselverdichters zu leiten.

13. Anlage nach Anspruch 12, bei welcher der Verdichter mit der Trennkolonne (37) verbunden ist, und die Einrichtungen umfasst, um zum Kreiselverdichter (67) das von der Trennkolonne kommende kohlenmonoxidangereicherte Gas (17, 37, 59) zu leiten, um dieses Gas derart mit Druck zu beaufschlagen, so dass es als Produkt dienen kann und als ein Zyklusgas, um die Sümpfe der Strippkolonne (31) und der Trennkolonne (37) wiederzuerwärmen und um den Kopf der Trennkolonne zu kühlen.

14. Anlage nach Anspruch 12 oder 13, umfassend Einrichtungen (V), um vom Kreiselverdichter (67) kommendes Gas (66) zu entspannen, um als Kühlfluid zum Kühlen des mindestens einen auf einer Zwischenebene der Waschkolonne (15) abgezogenen Fluids (28) zu dienen.

15. Anlage nach Anspruch 12 oder 13, umfassend Einrichtungen, um ein Fluid (43) vom Kopf der Trennkolonne (37) als Kühlfluid zum zweiten Wärmetauscher (29) zu leiten.

## Claims

1. Process for the combined production a) of a hydrogen-enriched gas and a carbon monoxide-enriched gas and/or b) a mixture of hydrogen and carbon monoxide and optionally methane by cryogenic distillation and scrubbing, in which:
i) a gaseous mixture (1) containing at least hydrogen, carbon monoxide and methane and optionally nitrogen is cooled in a heat exchanger (7)
ii) the cooled mixture is sent to a scrubbing column (15)
iii) a methane-rich liquid (45) is introduced into the scrubbing column as scrubbing liquid
iv) a hydrogen-enriched gas is drawn off as top gas (27) from the scrubbing column
v) a bottom liquid (17) is drawn off from the scrubbing column and sent to a stripping column (31)
vi) a bottom liquid (35) is drawn off from the stripping column and sent to a column (37) for separating carbon monoxide and methane
vii) at least a portion of the bottom liquid (41, 45) from the separation column constitutes the liquid of step iii), and
viii) a carbon monoxide-rich fluid (43, 66) is used as coolant fluid for cooling at least one fluid (28) drawn off at an intermediate level of the scrubbing column
ix) the fluid serving to cool the at least one fluid drawn off at an intermediate level of the scrubbing column is at a greater pressure than that of the top of the separation column
**characterized in that** the fluid having served to cool the at least one fluid drawn off at an intermediate level of the scrubbing column is sent to an intermediate level of a centrifugal compressor (67) in order to be compressed therein.

2. Process according to Claim 1, in which the fluid (43, 66) serving to cool at least one fluid (28) drawn off at an intermediate level of the scrubbing column is drawn off from the top of the separation column (37) and compressed to form carbon monoxide at a higher pressure, and at least a portion of the carbon monoxide at higher pressure is expanded to form the coolant fluid (66).

3. Process according to either of the preceding claims, in which liquid from a volume located at the top of the separation column (37) is expanded and sent to the separation column.

4. Process according to one of the preceding claims, in which the pressure difference between the fluid (43, 66) serving to cool at least one fluid (28) drawn off from an intermediate level of the scrubbing column and that of the top of the separation column is at least 0.5 bar, or even at least 0.9 bar.

5. Process according to one of the preceding claims, in which a portion (46) of the bottom liquid from the separation column is recovered as methane-rich product in liquid form or in gaseous form, after having vaporized it in the heat exchanger (7).

6. Process according to one of the preceding claims, in which a carbon monoxide-enriched fluid (62) is produced from the separation column, and is mixed with the hydrogen-enriched fluid (101) to form a product (105) .

7. Process according to one of the preceding claims, in which a carbon monoxide-enriched gas (65) heats the bottom of the stripping column (31) and/or the bottom of the separation column (37) and is sent to a volume (55) at the top of the separation column after expansion in a valve.

8. Process according to one of the preceding claims, in which at least a portion of the carbon monoxide-rich liquid from a volume (55) located at the top of the separation column (37) is expanded and sent to the top of the separation column to be vaporized on contact with the vapor rising inside the column and is subsequently mixed with a portion (53) of the top gas of the separation column.

9. Process according to one of the preceding claims, in which the separation column (37) is operated at 1.6 bar.

10. Process according to one of the preceding claims, in which a gas (53, 57) from the top of the separation column or from a volume at the top of the separation column is sent to the inlet of the compressor (67).

11. Process according to one of the preceding claims, in which a carbon monoxide cycle is used to heat the bottoms of the stripping column (31) and of the separation column (37) and to cool the top of the separation column, the centrifugal compressor (67) serving to compress the cycle gas.

12. Plant for the combined production a) of a hydrogen-enriched gas (27) and a carbon monoxide-enriched gas (69) and/or b) a mixture of hydrogen and carbon monoxide (105) and optionally methane by cryogenic distillation and scrubbing, comprising a centrifugal compressor (67), a first heat exchanger (7), a scrubbing column (15), a stripping column (31), a column (37)for separating carbon monoxide and methane, a pipe for sending a gaseous mixture (1) containing at least hydrogen, carbon monoxide and methane to be cooled in the first heat exchanger, a pipe for sending the cooled mixture from the first heat exchanger to the scrubbing column, a pipe for introducing a methane-rich liquid at the top of the scrubbing column as first scrubbing liquid, a pipe for drawing off a hydrogen-enriched gas as top gas of the scrubbing column, a pipe for drawing off a bottom liquid from the scrubbing column and for sending the bottom liquid of the scrubbing column to the stripping column, a pipe for drawing off a bottom liquid from the stripping column and sending it to the column for separating carbon monoxide and methane, at least a portion of the bottom liquid of the separation column constituting the methane-enriched liquid, and a pipe for drawing off a carbon monoxide-enriched fluid from the top of the separation column, a pipe for sending a carbon monoxide-enriched fluid (43, 66) as coolant fluid for cooling at least one fluid (28) drawn off at an intermediate level of the scrubbing column in a second heat exchanger (29), the plant comprising means for sending the fluid having served to cool the at least one fluid drawn off at an intermediate level of the scrubbing column, at a pressure greater than that of the top of the separation column, to an intermediate level of the centrifugal compressor.

13. Plant according to Claim 12, in which the compressor is connected to the separation column (37) and comprising means for sending the carbon monoxide-enriched gas (17, 37, 59) originating from the separation column to the centrifugal compressor (67) in order to pressurize this gas such that it can serve as product and as a cycle gas to heat the bottoms of the stripping column (31) and of the separation column (37) and to cool the top of the separation column.

14. Plant according to Claim 12 or 13, comprising means (V) for expanding the gas (66) originating from the centrifugal compressor (67) in order to serve as coolant fluid for the at least one fluid (28) drawn off at an intermediate level of the scrubbing column (15).

15. Plant according to Claim 12 or 13, comprising means for sending a fluid (43) from the top of the separation column (37) to the second heat exchanger (29) as coolant fluid.
